# EUROPEAN PATENT APPLICATION

(11) **EP 0 986 965 A1**
(43) Date of publication of application: **22.03.2000**
(21) Application number: 98203144.5
(22) Date of filing: 18.09.1998
(51) Int. Cl.: A23L 1/317, A23C 19/16, A23B 4/10, A23L 3/3526, A23L 3/3544, A23L 3/3535

(54) **Antifungal food coatings**

(71) Applicant: JANSSEN PHARMACEUTICA N.V., 2340 Beerse (BE)
(72) Inventor: Geusens, Luc Maria Irma Robert, 2340 Beerse (BE); Van Gestel, Jozef Frans Elisabetha, 2340 Beerse (BE)

(57) **Abstract**

The present invention concerns antifungal compositions comprising imazalil sulfate. It also relates to the use of said compositions to treat food products such as cheeses and sausages and protect them against mould growth.

## Description

The present invention concerns antifungal compositions comprising imazalil sulfate. It also relates to the use of said compositions to treat food products such as cheeses and sausages and protect them against mould growth.

Surface contamination is a major factor in the microbial deterioration of several foods and is undesired since it can degrade the organoleptic properties, cause an unacceptable appearance or even lead to the formation of mycotoxins harmful to the health of consumers. Antimicrobial agents are either mixed directly with foods or applied to the surface of foods to inhibit spoilage. If mixed directly, all added substances will be consumed even though they may not be needed in the interior of the food. Surface application does not have this disadvantage and only provides surface protection. Also an additional step in the manufacturing process is required.

Cheese must ripen - the better the ripening, the better the cheese. However, as is well known, ripening is a time-consuming process and needs optimal conditions to work properly. To help maintain these conditions and to prevent mould growth on the surface, hard and semi-hard cheeses are covered with several layers of protective coatings during ripening. These coatings serve mainly to protect and preserve the rind. Both the characteristics of the cheese itself and the conditions that typically prevail in processing rooms and ripening chambers, make cheese an ideal substrate for a variety of moulds. Most prevailing moulds are *Aspergillus spp., A. penicillioides, A. versicolor, Cladosporium spp., Penicillium spp., P. brevicompactum, P. chrysogenum, P. corylophilum, P. discolor, P. echinulatum, P. verrucosum complex, Trichoderma spp.* and *Wallemia sebi.*

Said coatings to protect cheese advantageously have one or more of the following properties:
- protect the rind against moulds
- protect the rind against mechanical damage
- slow down drying-out without affecting the ripening process
- gas-permeable (CO₂, O₂, etc.)
- do not affect the taste
- give the cheese an attractive look.

For almost 30 years natamycin has been used to prevent fungal growth on cheeses and sausages. Natamycin, also known as pimaricin, is a polyene antifungal antibiotic produced by *Steptomyces natalensis.* Natamycin is a white, tasteless and odourless powder and is poorly soluble in water. Due to its poor solubility in water of only 50 mg per liter (Oostendorp J.G. in *De Ware(n)-Chemicus,* **11**, p. 30-39, 1981) natamycin forms a suspension. Natamycin is quickly inactivated under the influence of ultraviolet light (The Merck Index, 10th edition) and breaks down during storage of cheese (Daemen C.B.G. and van den Berg G., NIZO-niews nr. 11, (1984), by the Dutch Institute for Dairy Research).

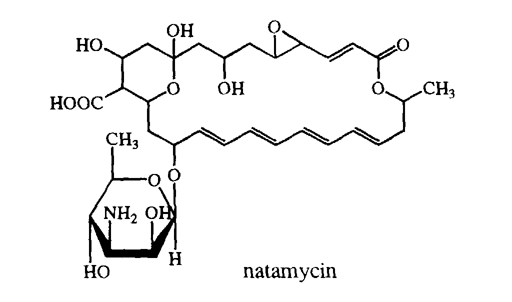

Natamycin exerts its antifungal activity by an irreversible reaction with the cell membrane of fungi. Only the natamycin which is in solution will be available to inhibit fungal growth. Due to the low solubility of natamycin this can result in fungal spoilage in circumstances where the amount of fungi is high since the dissolved fraction of natamycin is then insufficient to prevent fungal growth. Especially when food products are exposed to natamycin resistant moulds (see e.g. EP-0,748,588, page 1, first column, lines 28 to 33) the low solubility of natamycin hampers the prevention of spoilage.

It is known in the art, that e.g. cheeses are treated by immersion in a suspension of natamycin in water or covered by an emulsion of plastic in water, (mostly polyvinyl-acetate). Sausages are mainly treated by immersion or by spray coating with a suspension of natamycin in water.

A disadvantage of immersion is the necessity of a large scale preparation of immersion liquid. This means a considerable spillage of immersion liquid, as in most cases the remaining fluid cannot be re-used due to "pollution" by cheese ingredients and the limited stability of the liquid caused by bacterial contamination. This means non-economical use of the preparation and causes an environmental burden.

Natamycin containing plastic coatings are applied on hard and semi-hard cheeses. Unlike immersion, plastic coating of cheese has the advantage that the surface of the cheese can be treated by brushing, sponging or spraying with an emulsion, so there is no contaminated remaining immersion fluid. Applying plastic coating is economically attractive as the coating reduces loss of moisture and does not negatively influence the development of taste.

For the treatment of cheese an aqueous polymer emulsion of the polyvinyl acetate type can be used. Commercially available aqueous polyvinyl acetate emulsions are e.g. Plasticoat™ and Ceska™. Plasticoat™ can be acquired from National Starch & Chemical B.V., while the Ceska™ coating is obtainable from CSK Food Enrichment.

Due to the widespread use of natamycin in the prevention of fungal growth on food products, natamycin resistant fungal species are emerging. Example of such species are, e.g., *Penicillium echinulatum var. discolor* (*P. discolor*) and *Cladosporium herbarum.* Once *P. discolor* develops resistance against natamycin, it has a competitive advantage over other moulds and can quickly contaminate a complete cheese production facility (F.T.J. van Rijn, E.S. Hoekstra, M.I. van der Horst, R.A. Samson and J. Stark, *Voedingsmiddeltechnologie,* **20**, p. 19 - 23, 1997). When contamination with *P. discolor* takes place before the first coating is applied to the cheese, the development of this mould can no longer be controlled, even by applying multiple layers of natamycin containing plastic coating, thus causing serious spoilage problems in the production of cheese.

Growth of natamycin resistant fungal species can be overcome by increasing the amount of natamycin in the cheese coating, however there is a limit to the amount of natamycin in these coatings due to governmental regulations on the Acceptable Daily Intake (ADI) of food additives. Natamycin has the tendency to migrate slowly from the coating into the cheese. The European Parliament and Council Directive No. 95/2/EC of 20 February 1995 on food additives other than colours and sweeteners establishes that the penetration depth of natamycin into cheese should not exceed 5 mm and that the amount of natamycin on the surface should not exceed 1 mg per dm² cheese surface. A theoretical calculation shows that 1 treatment of cheese with a plastic coating having a natamycin content of 500 ppm can exceed the limit of 1 mg/dm² natamycin (Daemen C.B.G. and van den Berg G., NIZO-niews nr. 11, (1984), by the Dutch Institute for Dairy Research). Since a 5 month old cheese, depending on the storage conditions, usually needs 4 to 5 treatments with a plastic coating the amount of natamycin in these plastic coatings is typically about 250 ppm. Higher amounts of natamycin in plastic coating can easily lead to exceeding the limit of 1 mg per dm² cheese surface or the maximum penetration depth of 5 mm. Hence, there is an upper limit to the amount of natamycin in plastic cheese coatings which may be insufficient to protect cheeses from spoilage by natamycin resistant fungal species.

Increasing the amount of natamycin in polyvinyl acetate emulsions is also hampered by the low solubility of natamycin.

To control unwanted outgrowth of natamycin resistant fungal species and in view of an effective anti-resistance strategy, it would be very useful to have an alternative fungicide to natamycin available.

The inhibition of moulds on cheese by imazalil incorporated into low density polyethylene (LDPE) film has been described by Wheng Y.-M. and Hotchkiss J.H. in *Journal of Food Protection,* **55**, p. 367 - 369, (1992). They described the inhibition of mould growth on the surface of Cheddar cheese by a LDPE packaging film containing imazalil.

EP-0,513,922, published on 19 November 1992, discloses an oil in water emulsion comprising a suitable emulsifier, and at least one suitable antifungal agent, such as, e.g. natamycin, imazalil, lucensomycin, amphotericin B or nystatin, as a coating for foods and agricultural products to prevent the growth of moulds.

EP-0,608,944, published on 3 August 1994, describes an antifungal composition comprising an antifungal agent of the polyene type, preferably natamycin or lucensomycin, an acidic antifungal compound and an additional organic acid or its alkali or earth alkali salt, as a fungicide composition to prevent the growth of mould on foodstuffs and agricultural products.

WO-95/08918, published on 6 April 1995, discloses antifungal suspensions for the treatment of foodstuffs or agricultural products containing an antifungal agent of the polyene type, such as natamycin, wherein said antifungal agent is incorporated into the composition in a form which shows an enhanced activity, e.g. being in a modified polymorphic form.

EP-0,748,588, published on 13 May 1996, discloses fungicide compositions comprising an antifungal amount of a polyene antifungal agent, such as natamycin, and an antifungal amount of an imidazole antifungal agent, such as imazalil, for the protection of foodstuffs or agricultural products. On page 8 second column, lines 13 to 18, it is stated that imazalil alone, even at very high concentrations, will not prevent spoilage by fungal species and that imazalil penetrates into the cheese and will not prevent fungal growth at the surface of the cheese, even when used at very high concentrations.

The present invention relates to aqueous emulsions comprising polyvinyl acetate or a copolymer of polyvinyl acetate with dibutyl maleic acid, and the antifungal imazalil sulfate for the protection of food products. Unexpectedly and contrary to what was alleged in EP-0,748,588, it was found that the resulting food coatings are able to prevent growth of natamycin resistant fungal species. Furthermore, imazalil sulfate remains in the coating and after a storage period of 3 months or more the penetration depth of imazalil sulfate in the cheese does not exceed 1 mm while the amount of imazalil sulfate on the surface does not exceed 1 mg per dm². Hence, the imazalil sulfate comprising food coatings of the present invention are in full compliance with European Community regulations.

Imazalil sulfate is the 1:1 addition salt of imazalil with sulfuric acid and is the generic name of the compound (±)-1-[2-(2,4-dichlorophenyl)-2-(2-propenyloxy)ethyl]-1*H-*imidazole sulfate, which compound can be represented by the formula:

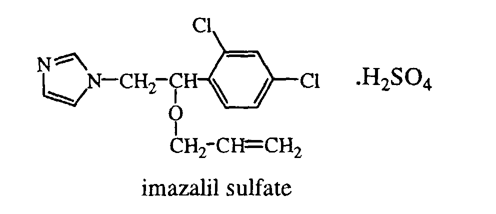

The free base form of imazalil sulfate, *i.e.* imazalil, is described in US-3,658,813, as well as its synthesis and its antifungal properties.

In a broader sense, the present invention also relates to the use of imazalil sulfate for combatting natamycin resistant fungi.

The aqueous polymer emulsions of the present invention comprise polyvinyl acetate or a copolymer of polyvinyl acetate with dibutyl maleic acid having a concentration of about 40% w/v.

The amount of the antifungal imazalil sulfate ranges from 0.1 ppm to 1000 ppm, in particular from 13 ppm to 666 ppm, especially from 133 to 333 ppm.

The amount of imazalil sulfate in the aqueous polymer emulsions of the present invention can also be expressed in function of the amount of A.I. (active ingredient), *i.e.* the free base form imazalil. Hence the amount of imazalil sulfate, expressed in function of the amount of A.I. ranges from 0.1 to 750 ppm, in particular from 10 to 500 ppm, more particular from 100 to 250 ppm.

The pH of the present aqueous polymer emulsions is from 3 to 8 and preferably from 4.5 to 5.5. The pH of these aqueous polymer emulsions can be adjusted by any method, e.g. by adding an acidic or a basic compound. Useful acids are e.g. citric acid, lactic acid, hydrochloric acid, phosphoric acid, sulphuric acid and tartaric acid. Useful basic compounds are e.g. sodium hydroxide, potassium hydroxide, ammonia and calcium hydroxide.

The addition of a surfactant may be advantageous, in particular for treating objects with a hydrophobic surface. Useful surfactants are for example, anionic tensides such as sodium lauryl sulphate or polyethylene alkyl ethers such as Cetomacrogol™ 1000 or polyoxyethylene ethers e.g. Tween 60™, 61 and 65.

The aqueous emulsions of the present invention are preferably obtained from concentrates, such as e.g. emulsifiable concentrates, suspension concentrates, or soluble concentrates, which upon dilution with water yield an aqueous emulsion comprising polyvinyl acetate or a copolymer of polyvinyl acetate with dibutyl maleic acid having a concentration of about 40% w/v and the antifungal imazalil sulfate having a concentration ranging from 0.1 ppm to 1000 ppm, in particular from 13 ppm to 666 ppm, more particular from 133 to 333 ppm. Consequently, the invention also relates to a product containing an aqueous emulsion of polyvinyl acetate or a copolymer of polyvinyl acetate with dibutyl maleic acid, and an aqueous concentrate of imazalil sulfate, which upon combination and dilution with water yields an aqueous emulsion for treating food products.

### Comparative example.

The effectiveness of the food coatings comprising imazalil sulfate of the present invention to control natamycin resistant moulds was demonstrated in an experiment using cheeses of the "Gouda" type inoculated with three different amounts of spores of *Penicillium echinulatum var. discolor.* These *P. discolor* spores were isolated from cheese treated with natamycin.

A batch of "Gouda" type cheeses was treated with an aqueous polymer emulsion of the polyvinyl acetate type comprising 250 ppm of natamycin. After drying the cheeses were kept on perforated coated steel plates during the whole experiment.
Said batch of cheeses was divided in three equal lots and each lot was contaminated with a different amount of spores of *P. discolor*:
Lot A : contaminated with 59x10⁵ CFU/ml suspension (CFU : Colony Forming Units)
Lot B : contaminated with 190x10⁵ CFU/ml suspension
Lot C : contaminated with 420x10⁵ CFU/ml suspension.

One day after contamination each lot of cheeses was treated with an aqueous polymer emulsion of the polyvinyl acetate type comprising either 100 ppm natamycin, 250 ppm natamycin, 133 ppm imazalil sulfate (corresponding to 100 ppm A.I.) or 333 ppm imazalil sulfate (corresponding to 250 ppm A.I.). Five days later all cheeses were treated again with the same coating.

Within 12 days after contamination cheeses coated with the natamycin coatings (both the 100 ppm and the 250 ppm coatings) developed a clearly visible green mould and no visible difference was observed in mould intensity between the two concentrations of natamycin in the coating. The cheeses coated with an imazalil sulfate coating (both the 133 ppm and the 333 ppm) were free of visible mould growth.

The surface of the contaminated cheeses was also sampled for microbiological analysis using sterile cotton swabs. The samples were diluted and plated on oxytetracycline glucose yeast extract (OGY) agar medium and incubated at 25°C for 5 days. The results were calculated as CFU (Colony Forming Units) per 100 cm² cheese surface. Cheeses treated with a natamycin coating showed a flora fully dominated by *P. discolor* and high numbers of CFU. The cheeses treated with the imazalil sulfate coatings had a much lower number of CFU.

It was concluded that the coatings comprising imazalil sulfate had the ability to suppress the growth of *Penicillium echinulatum var. Discolor* on cheese which could not be inhibited by natamycin coatings.

### Penetration of imazalil sulfate into cheese.

Cheeses were treated with an aqueous polymer emulsion of the polyvinyl acetate type comprising imazalil sulfate and samples were collected at depths of 0 to 10 mm from the surface and analysed. Even after a storage period of 1, 2 and 3 months and after several treatments with imazalil sulfate comprising food coatings only traces of imazalil sulfate were detected under the surface layer not exceeding a penetration depth of 1 mm.

## Claims

1. An aqueous emulsion suitable for coating a food product comprising
(a) polyvinyl acetate or a copolymer of polyvinyl acetate with dibutyl maleic acid, and
(b) the antifungal imazalil sulfate.

2. An aqueous emulsion as claimed in claim 1 wherein the amount of polyvinyl acetate or a copolymer of polyvinyl acetate with dibutyl maleic acid is about 40% w/v.

3. An aqueous emulsion as claimed in claim 1 or claim 2 wherein the amount of imazalil sulfate ranges from 0.1 ppm to 1000 ppm.

4. An aqueous emulsion as claimed in claim 1 or claim 2 wherein the amount of imazalil sulfate ranges from 13 ppm to 666 ppm.

5. An aqueous emulsion as claimed in claim 1 or claim 2 wherein the amount of imazalil sulfate ranges from 133 ppm to 333 ppm.

6. A food product coated with an emulsion as defined in any of claims 1 to 5.

7. A food product according to claim 6 wherein said food product is a sausage or a hard or semi-hard cheese.

8. Use of an aqueous emulsion as defined in any of claims 1 to 5 for coating a food product.

9. Use of imazalil sulfate for combatting natamycin resistant fungi.

10. A product containing
a) an aqueous emulsion of polyvinyl acetate or a copolymer of polyvinyl acetate with dibutyl maleic acid, and
b) an aqueous concentrate of imazalil sulfate,
which upon combination and dilution with water yields an aqueous emulsion for treating food products.
